# EUROPÄISCHE PATENTANMELDUNG

(11) **EP 3 312 052 A1**
(43) Veröffentlichungstag der Anmeldung: **25.04.2018**
(21) Anmeldenummer: 17194970.4
(22) Anmeldetag: 05.10.2017
(51) Int. Cl.: B60Q 1/18, B60Q 1/26

(54) **BELEUCHTUNGSMODUL EINES FAHRZEUGS**

(30) Priorität: 17.10.2016 DE 102016220189
(71) Anmelder: Robert Bosch GmbH, 70442 Stuttgart (DE)
(72) Erfinder: Keller, Simon, 72770 Reutlingen (DE); Streichfuss, Martin, 72770 Reutlingen (DE); Gleichauf, Felix, 70567 Stuttgart (DE)

(57) **Zusammenfassung**

Die vorliegende Erfindung betrifft ein Beleuchtungsmodul (1) eines Fahrzeugs (2), umfassend eine Laserlichtquelle (3) zum Aussenden von Laserlicht, eine Umlenkvorrichtung (4) zum Umlenken des Laserlichts, und eine Steuerungsvorrichtung (5) zum Ansteuern der Laserlichtquelle (3) und der Umlenkvorrichtung (4), wobei die Steuervorrichtung (5) eingerichtet ist, über die Laserlichtquelle (3) und die Umlenkvorrichtung (4) in Fahrtrichtung des Fahrzeugs weisende Führungsstrahlen (6) auf einen Untergrund vor dem Fahrzeug (2) oder in einen Raum vor dem Fahrzeug (2) zu projizieren.

## Beschreibung

### Stand der Technik

Die vorliegende Erfindung betrifft ein Beleuchtungsmodul eines Fahrzeugs. Außerdem betrifft die Erfindung ein Fahrzeug umfassend ein solches Beleuchtungsmodul.

Aus dem Stand der Technik sind Nebelscheinwerfer für Fahrzeuge bekannt. Diese Nebelscheinwerfer sind Scheinwerfer, die nahe an einem Boden an der Fahrzeugfront angebracht sind und eine blendarme Ausleuchtung der Fahrbahn ermöglichen. Dadurch soll vorwiegend eine Beleuchtung von Fahrbahnmarkierungen bei schlechten Sichtverhältnissen ermöglicht werden.

Aus der DE 10 2011 121 627 A1 ist außerdem eine Head-Up Anzeige für Fahrzeuge zum Unterstützen eines Fahrers bei schlechten Sichtverhältnissen bekannt.

### Offenbarung der Erfindung

Das erfindungsgemäße Beleuchtungsmodul erlaubt eine verbesserte Unterstützung des Fahrers eines Fahrzeugs bei schlechten Sichtbedingungen wie insbesondere Nebel. Insbesondere wird dem Fahrer eine visuelle Hilfe gegeben, sein Fahrzeug sicher und unfallfrei auch bei schlechter Sicht zu steuern.

Das Beleuchtungsmodul umfasst eine Laserlichtquelle zum Aussenden von Laserlicht, eine Umlenkvorrichtung zum Umlenken des Laserlichts, und eine Steuerungsvorrichtung zum Ansteuern der Laserlichtquelle und der Umlenkvorrichtung. Dabei ist vorgesehen, dass die Steuervorrichtung eingerichtet ist, über die Laserlichtquelle und die Umlenkvorrichtung in Fahrtrichtung des Fahrzeugs weisende Führungsstrahlen auf einen Untergrund oder in einen Raum vor dem Fahrzeug zu projizieren. Bei dem Untergrund handelt es sich insbesondere um denjenigen Untergrund, auf dem das steht. Die Projektion in den Raum vor dem Fahrzeug ist insbesondere aufgrund der schlechten Sicht ermöglicht. So stellt bevorzugt der Nebel eine Vielzahl von Reflexionselementen für den von dem Beleuchtungsmodul ausgesandten Laserstrahl dar, sodass dieser von dem Fahrer des Fahrzeugs sichtbar ist. Die relative Angabe vor ist hierbei als solche Richtung zu verstehen, in die der Fahrer bei normalen Fahrbedingungen ausgerichtet ist. Durch die Führungsstrahlen wird dem Fahrer angezeigt, wohin sich sein Fahrzeug bewegen wird, sodass der Fahrer vorausschauend die Fahrt des Fahrzeugs planen kann. Besonders vorteilhaft ist vorgesehen, dass die Führungsstrahlen Objekte vor dem Fahrzeug visuell markieren.

Die Unteransprüche zeigen bevorzugte Weiterbildungen der Erfindung.

Bevorzugt ist die Steuerungsvorrichtung eingerichtet, über die Laserlichtquelle und Umlenkvorrichtung Hilfslinien auf den Untergrund oder in den Raum vor dem Fahrzeug zu projizieren. Die Hilfslinien stellen bevorzugt einen Fahrbahnverlauf dar oder zeigen die zu haltende Spur an. Ein Führen des Fahrzeugs ist somit vereinfacht, da ein Fahrer bevorzugt lediglich die Führungslinien deckungsgleich mit den Hilfslinien halten muss.

Besonders vorteilhaft sind die Führungsstrahlen und/oder die Hilfslinien zumindest teilweise in einen Bereich projizierbar, der von Abblendscheinwerfern und/oder Nebelscheinwerfern und/oder insbesondere Fernlichtscheinwerfern des Fahrzeugs nicht ausleuchtbar ist. Dies ist insbesondere daher vorteilhaft, da ein Laserstrahl weiter entfernt sichtbar ist als dies bei flächiger Beleuchtung möglichst ist. Gleichzeitig ist eine Blendwirkung des Laserstrahls sehr gering. Somit wird eine visuelle Hilfestellung für den Fahrer des Fahrzeugs bereitgestellt ohne andere Fahrer anderer Fahrzeuge zu beeinflussen.

Ebenso ist besonders vorteilhaft vorgesehen, dass die Steuerungsvorrichtung zum Einbringen eines Entfernungsmaßstabes entlang der Fahrtrichtung in die Führungsstrahlen und/oder die Hilfslinien ausgebildet ist. Dabei ist der Entfernungsmaßstab insbesondere durch Intensitätsmodulation des Laserlichts generierbar. Alternativ oder zusätzlich ist der Entfernungsmaßstab durch Projektion zusätzlicher Maßstabslinien generierbar. Durch den Entfernungsmaßstab ist dem Fahrer eine Hilfestellung gegeben, Abstände einzuschätzen. Dies gilt insbesondere für Abstände, die sich weit von seinem Fahrzeug entfernt befinden.

Ein von der Laserlichtquelle ausgehender Lichtstrom ist von der Umlenkvorrichtung bevorzugt in zwei Dimensionen auslenkbar. Das Auslenken in die zwei Dimensionen ist bevorzugt unabhängig voneinander. Somit ist eine Projektion an beliebige Stellen vor dem Fahrzeug ermöglicht. Insbesondere lassen sich so auch solche Hilfslinien projizieren, die gewinkelt zu der Fahrtrichtung des Fahrzeugs verlaufen, was für die oben beschriebene Anzeige von Kurven vorteilhaft ist.

Die Steuerungsvorrichtung ist vorteilhafterweise zum kontinuierlichen Ablenken des Laserlichts durch die Umlenkvorrichtung ausgebildet. Auf diese Weise ist eine Fläche auf den Untergrund oder in den Raum vor dem Fahrzeug projizierbar. Besonders vorteilhaft ist die Fläche senkrecht zu dem Untergrund ausgerichtet und visualisiert somit einen Korridor, in dem das Fahrzeug fahren muss, um nicht von der Straße abzukommen und/oder um nicht mit potentiellen Hindernissen zu kollidieren. Ein Anzeigen einer somit bevorzugt vertikal ausgerichteten Fläche ist durch die Reflexion des Laserlichts an dem Nebel ermöglicht. Das Beleuchtungsmodul arbeitet in diesem Fall wie ein Laserscanner.

Die Steuerungsvorrichtung ist bevorzugt mit einem Bussystem des Fahrzeugs verbindbar. Über die Busverbindung mit dem Fahrzeug sind der Steuerungsvorrichtung um Umfelddaten des Fahrzeugs übertragbar. Durch die Verbindung mit dem Bussystem kann die Steuerungsvorrichtung die Umfelddaten somit insbesondere von einer Umfeldsensorik des Fahrzeugs empfangen. Somit steht der Steuerungsvorrichtung ein genaues Bild der Umgebung des Fahrzeugs zur Verfügung, sodass eine sichere und zuverlässige Visualisierung eine Straßenverlaufs und/oder von Hindernissen durch das Beleuchtungsmodul ermöglicht ist.

Die Erfindung betrifft weiterhin ein Fahrzeug. Das Fahrzeug weist ein Beleuchtungsmodul wie zuvor beschrieben auf. Somit erlaubt das Fahrzeug, dem Fahrer eine visuelle Hilfestellung bei schlechten Sichtbedingungen, insbesondere bei Nebel, zu geben.

Besonders bevorzugt ist das Beleuchtungsmodul in einen Scheinwerfer des Fahrzeugs integriert. Besonders vorteilhaft ist das Beleuchtungsmodul in einen Nebelscheinwerfer des Fahrzeugs integriert. Somit erfüllt das Beleuchtungsmodul dieselbe Funktion wie ein Scheinwerfer, wobei durch das Beleuchtungsmodul anstatt einer reinen Ausleuchtung gezielte Informationen hinsichtlich einer aktuellen Fahrtrichtung und/oder hinsichtlich einer Soll-Fahrtrichtung und/oder hinsichtlich potentieller Hindernisse gegeben sind. Vorteilhafterweise weist das Fahrzeug zwei Beleuchtungsmodule auf, wobei jeweils ein Beleuchtungsmodul in jeweils einen Scheinwerfer integriert ist.

Alternativ ist das Beleuchtungsmodul in zumindest einen, insbesondere in zwei, Außenspiegel des Fahrzeugs integriert ist. Bevorzugt ist jedes Beleuchtungsmodul somit in jeweils einen Außenspiegel des Fahrzeugs integriert.

### Kurze Beschreibung der Zeichnung

Nachfolgend werden Ausführungsbeispiele der Erfindung unter Bezugnahme auf die begleitende Zeichnung im Detail beschrieben. In der Zeichnung ist:
- Figur 1: eine schematische Abbildung eines Beleuchtungsmoduls gemäß einem Ausführungsbeispiel der Erfindung,
- Figur 2: eine schematische Abbildung eines Fahrzeugs gemäß einem ersten Ausführungsbeispiel der Erfindung,
- Figur 3: eine schematische Abbildung eines Fahrzeugs gemäß einem zweiten Ausführungsbeispiel der Erfindung,
- Figur 4: eine schematische Abbildung eines Fahrzeugs gemäß einem dritten Ausführungsbeispiel der Erfindung,
- Figur 5: eine schematische Abbildung eines Fahrzeugs gemäß einem vierten Ausführungsbeispiel der Erfindung,
- Figur 6: eine schematische Abbildung eines Fahrzeugs gemäß einem fünften Ausführungsbeispiel der Erfindung, und
- Figur 7: eine schematische Abbildung eines Fahrzeugs gemäß einem sechsten Ausführungsbeispiel der Erfindung,

### Ausführungsformen der Erfindung

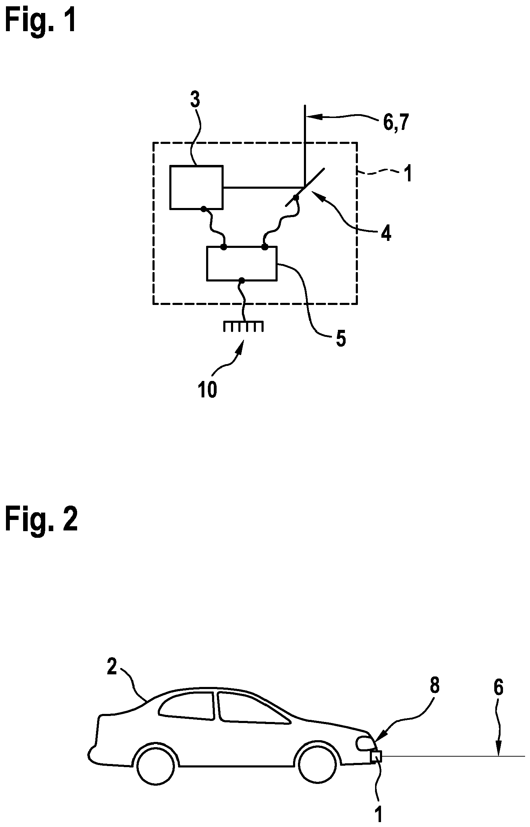

Figur 1 zeigt schematisch ein Beleuchtungsmodul 1 gemäß einem Ausführungsbeispiel der Erfindung. Das Beleuchtungsmodul 1 ist insbesondere in einem Fahrzeug 2 (vgl. Figuren 2 bis 7), insbesondere in einem Personenkraftwagen oder einem Lastkraftwagen, verwendbar. Das Beleuchtungsmodul 1 dient zum Aussenden von Führungsstrahlen 6 und/oder Hilfslinien 7 insbesondere in einen Raum in Fahrtrichtung vor dem Fahrzeug 2.

Das Beleuchtungsmodul 1 umfasst eine Laserlichtquelle 3. Über die Laserlichtquelle 3 ist ein Laserlicht aussendbar. Das von der Laserlichtquelle 3 ausgesandte Laserlicht ist von einer Umlenkvorrichtung 4 umlenkbar. Die Umlenkvorrichtung 4 umfasst insbesondere einen Mikrospiel, wobei der Mikrospiegel in zumindest zwei Dimensionen auslenkbar ist. Somit ist ein projizieren von Führungsstrahlen 6 und/oder Hilfslinien 7 auf einen Untergrund oder in einen Raum vor dem Fahrzeug 2 ermöglicht. Durch die zweidimensionale Einstellbarkeit des Mikrospiegels ist dabei eine Position der Führungsstrahlen 6 und/oder Hilfslinien 7 relativ zu dem Beleuchtungsmodul 1 einstellbar.

Das Beleuchtungsmodul 1 umfasst ferner eine Steuerungsvorrichtung 5. Die Steuerungsvorrichtung 5 ist zum Ansteuern der Laserlichtquelle 3 und der Umlenkvorrichtung 4 ausgebildet. Somit ist über die Umlenkvorrichtung ermöglicht, besagte Führungsstrahlen 6 und/oder Hilfslinien 7 durch entsprechendes Ansteuern von Laserlichtquelle 3 und Umlenkvorrichtung 4 auszusenden.

Um den Fahrer eines Fahrzeugs 2, das mit dem Beleuchtungsmodul 1 ausgestattet ist, eine optimale Hilfestellung zu geben, benötigt die Steuerungsvorrichtung 5 vorteilhafterweise Informationen über ein Umfeld des Fahrzeugs 2. Dabei ist vorgesehen, dass die Steuerungsvorrichtung 5 über eine Schnittstelle 10 mit einem Bussystem des Fahrzeugs 2 verbindbar ist. Über das Bussystem und die Schnittstelle 10 sind der Steuerungsvorrichtung 5 somit Umfelddaten des Fahrzeugs 2, die insbesondere über Umfeldsensoren wie Radarsensoren, Lidarsensoren oder GPS-Sensoren des Fahrzeugs gewonnen werden, übertragbar. Die Umfeldsensoren dienen zum Erkennen einer Fahrbahn, auf der sich das Fahrzeug 2 befindet, und/oder zum Erkennen von Objekten rund um das, insbesondere vor dem, Fahrzeug 2. Auf diese Weise kann die Steuerungsvorrichtung 5 insbesondere gezielt Gefährdungen visualisieren. Außerdem ist ein Verlauf einer Straße, insbesondere einer Kurve, vorausschauend visualisierbar. Dem Fahrer des Fahrzeugs 2 ist somit eine Hilfestellung gegeben, da ein Nichteinhalten einer Spur einfach und intuitiv angezeigt werden kann.

Das Beleuchtungsmodul 1 sendet, wie zuvor beschrieben, Laserlicht aus. Ein Laserstrahl ist weiter entfernt sichtbar als flächige Beleuchtungen, wie beispielsweise durch Scheinwerfer 8 des Fahrzeugs 2. Somit bietet das Beleuchtungsmodul 1 insbesondere bei schlechten Sichtbedingungen wie bei Nebel eine verbesserte Hilfestellung gegenüber normalen Scheinwerfern 8. Besonders vorteilhaft ist somit vorgesehen, dass die Führungsstrahlen 6 und/oder Hilfslinien 7 zumindest teilweise in einen Bereich projiziert werden, der nicht von den Scheinwerfern 8 des Fahrzeugs ausgeleuchtet ist.

Die Projektion des Laserlichts kann vorteilhafterweise auf einen Untergrund erfolgen. Alternativ oder zusätzlich ist vorgesehen, dass die Führungsstrahlen 6 und/oder Hilfslinien 7 direkt in den Raum vor den Fahrzeug 2 projiziert werden. Hierbei dient insbesondere ein vorhandener Nebel als Projektionsfläche, da durch den Nebel eine Vielzahl von Reflexionselementen vorhanden sind, die das Laserlicht reflektieren und somit für den Fahrer des Fahrzeugs 2 sichtbar machen. Für den Fahrer ist somit der gesamte Laserstrahl sichtbar.

Die Steuerungsvorrichtung 5 ist außerdem bevorzugt zum Anpassen des Laserlichts 3 an Eingangssignale, die über die Schnittstelle 10 aus dem Bussystem empfangen werden, ausgebildet. So lassen sich anhand solcher Eingangssignale ausgesendete Laserstrahlen in Richtung und/oder Modulation und/oder Intensität und/oder Farbe, das bedeutet Wellenlänge, und/oder Durchmesser und/oder Divergenz und/oder Polarisation einstellen. Bei dem Bussystem kann es sich insbesondere um ein Bussystem eines Fahrassistenzsystems des Fahrzeugs 2 handeln.

Die Figuren 2 bis 7 zeigen verschiedene Ausführungsbeispiele eines Fahrzeugs 2 mit einem Beleuchtungsmodul 1. Dabei ist vorgesehen, dass die einzelnen Ausführungsbeispiele miteinander kombiniert werden können, indem ein multifunktionales Beleuchtungsmodul 1 in einem Fahrzeug 2 bereitgestellt ist.

Figur 2 zeigt ein Fahrzeug 2 gemäß einem ersten Ausführungsbeispiel der Erfindung. Das Fahrzeug 2 umfasst ein Beleuchtungsmodul 1 wie zuvor beschrieben, wobei das Beleuchtungsmodul 1 in Scheinwerfern 8, insbesondere in Nebelscheinwerfern, des Fahrzeugs 2 integriert ist. Das Beleuchtungsmodul 1 dient zum Aussenden eines Führungsstrahls 6, bevorzugt zum Aussenden jeweils eines Führungsstrahles 6 aus jeweils einem Scheinwerfer 8 des Fahrzeugs 2. Somit kann der Fahrer des Fahrzeugs 2 den zumindest einen Führungsstrahl 6 vor seinem Fahrzeug 2 erkennen, wobei der zumindest eine Führungsstrahl 6 eine Ausrichtung des Fahrzeugs 2 und damit eine Fahrtrichtung des Fahrzeugs 2 anzeigt. Dem Fahrer ist daher ein Abschätzen einer Bewegung des Fahrzeugs 2 relativ zu der Umgebung erleichtert.

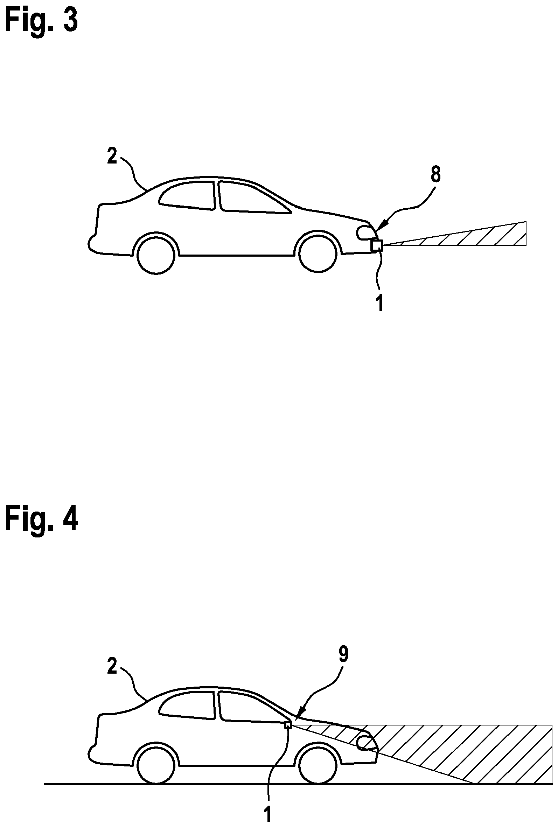

Figur 3 zeigt ein Fahrzeug 2 gemäß einem zweiten Ausführungsbeispiel der Erfindung. Im Unterschied zu dem ersten Ausführungsbeispiel ist die Steuerungsvorrichtung 5 eingerichtet, die Umlenkvorrichtung 4 zum kontinuierlichen Ablenken des Laserlichts von der Laserlichtquelle 3 anzusteuern auf diese Weise wird eine Projektionsfläche generiert, wobei die Projektionsfläche senkrecht zu einem Untergrund, auf dem sich das Fahrzeug 2 befindet, ausgerichtet ist. Somit ist die in Figur 2 gezeigte und oben beschriebene Aussendung von Führungsstrahlen 6 insofern verbessert, dass Projektionsflächen vor dem Fahrzeug 2 sichtbar sind. Besonders vorteilhaft wird wiederum aus jedem Scheinwerfer 8 jeweils eine Projektionsfläche vor das Fahrzeug 2 projiziert, so dass dem Fahrer der Eindruck eines Korridors gegeben wird, dem das Fahrzeug 2 folgen muss. Daher ist dem Fahrer des Fahrzeugs 2 auch bei schlechter Sicht ein Hilfsmittel gegeben, um sicher und zuverlässig das Fahrzeug 2 zu steuern.

Figur 4 zeigt ein Fahrzeug 2 gemäß einem dritten Ausführungsbeispiel der Erfindung. Dabei ist das dritte Ausführungsbeispiel funktional identisch zu dem zweiten Ausführungsbeispiel. Ein Unterschied zwischen dem dritten Ausführungsbeispiel und dem zweiten Ausführungsbeispiel liegt lediglich darin, dass das Beleuchtungsmodul 1 in zumindest einem Außenspiegel 9, insbesondere in beiden Außenspiegel 9, des Fahrzeugs 2 angebracht ist. Auf diese Weise ist insbesondere eine Verschmutzung des Beleuchtungsmoduls 1 vermeidbar.

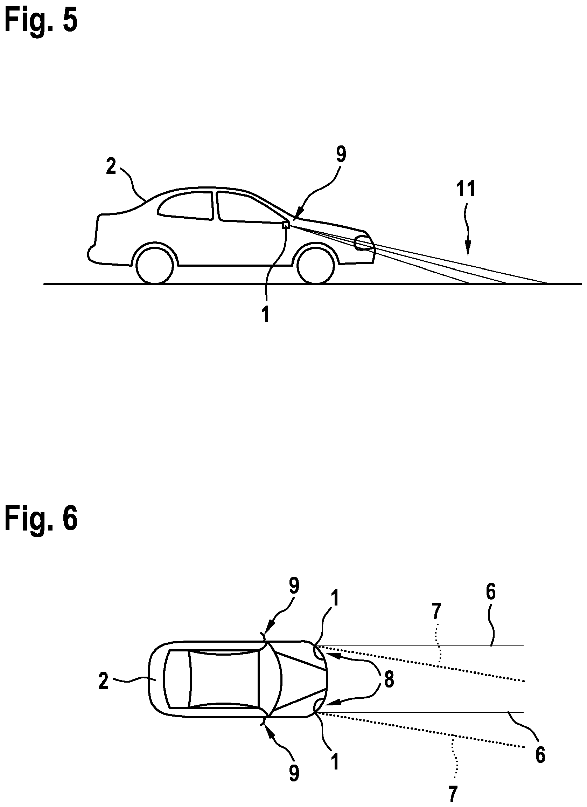

Figur 5 zeigt ein Fahrzeug 2 gemäß einem vierten Ausführungsbeispiel der Erfindung. Wiederum ist vorgesehen, dass das Beleuchtungsmodul 1 in einem Außenspiegel 9, bevorzugt in beiden Außenspiegel 9, des Fahrzeugs 2 angebracht ist. Dabei ist vorgesehen, dass die Steuerungsvorrichtung 5 ausgebildet ist, das von der Laserlichtquelle 3 ausgesandte Laserlicht durch Intensitätsmodulation entlang der Fahrtrichtung unterschiedlich auszugestalten. Somit erkennt der Fahrer des Fahrzeugs 2 aufgrund der unterschiedlichen Intensitäten ein Muster im Bereich vor dem Fahrzeug 2. Dieses Muster dient als Entfernungsmaßstab 11 zur besseren Einschätzung von Abständen. Somit kann der Fahrer des Fahrzeugs 2 Abstände auch dann optimal abschätzen, wenn die Sicht durch Nebel oder ähnliche Einflüsse verringert ist. Als Alternative kann der Entfernungsmaßstab 11 auch durch ein Hilfsmuster, das durch entsprechendes Auslenken der Umlenkvorrichtung 4 generiert wird, oder durch unterschiedliche Farbgebung erzeugt werden.

Figur 6 zeigt ein fünftes Ausführungsbeispiel der Erfindung. Dabei ist vorgesehen, dass zwei Beleuchtungsmodule 1 an dem Fahrzeug 2 vorhanden sind. Jedes Beleuchtungsmodul 1 ist in jeweils einem Scheinwerfer 8 des Fahrzeugs 2 angebracht. Somit sind zwei Führungsstrahlen 6 auf den Untergrund oder in den Raum vor dem Fahrzeug projizierbar. Des Weiteren ist vorgesehen, dass durch das Beleuchtungsmodul 1 Hilfslinien 7 auf den Untergrund oder in den Raum vor dem Fahrzeug projizierbar sind. Die Hilfslinien 7 zeigen bevorzugt den Verlauf der Straße an. Auf diese Weise sind insbesondere Kurven sicher und zuverlässig visualisierbar. Damit wird dem Fahrer des Fahrzeugs 2 das Halten einer Spur erleichtert. Insbesondere muss der Fahrer des Fahrzeugs 2 lediglich dafür sorgen, dass die Hilfslinien 7 deckungsgleich mit den Führungsstrahlen 6 sind.

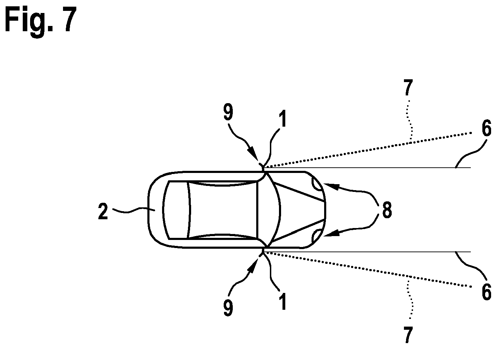

Figur 7 zeigt schematisch ein sechstes Ausführungsbeispiel der Erfindung. Dabei ist das sechste Ausführungsbeispiel funktional identisch zu dem fünften Ausführungsbeispiel. Im Unterschied zu dem fünften Ausführungsbeispiel ist lediglich jedes Beleuchtungsmodul 1 anstatt in einem Scheinwerfer 8 in jeweils einem Außenspiegel 9 des Fahrzeugs 2 angebracht. Die Hilfslinien 7 und die Führungsstrahlen 6 sind in Figur 7 lediglich beispielhaft gezeigt. Insbesondere erlaubt das Anbringen der Beleuchtungsmodule 1 an den Außenspiegeln 9 des Fahrzeugs 2 einen größeren Abstand zwischen den Führungsstrahlen 6 bereitzustellen, als wenn die Beleuchtungsmodule 1 in jeweils einem Scheinwerfer 8 des Fahrzeugs 2 angebracht wären. Mit ist für den Fahrer des Fahrzeugs 2 einfacher, den Führungsstrahlen 6 zu folgen.

## Patentansprüche

1. Beleuchtungsmodul (1) für ein Fahrzeug (2), umfassend
• eine Laserlichtquelle (3) zum Aussenden von Laserlicht,
• eine Umlenkvorrichtung (4) zum Umlenken des Laserlichts, und
• eine Steuerungsvorrichtung (5) zum Ansteuern der Laserlichtquelle (3) und der Umlenkvorrichtung (4),
• wobei die Steuervorrichtung (5) eingerichtet ist, über die Laserlichtquelle (3) und die Umlenkvorrichtung (4) in Fahrtrichtung des Fahrzeugs (2) weisende Führungsstrahlen (6) auf einen Untergrund vor dem Fahrzeug (2) oder in einen Raum vor dem Fahrzeug (2) zu projizieren.

2. Beleuchtungsmodul (1) nach Anspruch 1, **dadurch gekennzeichnet, dass** die Steuerungsvorrichtung (5) eingerichtet ist, über die Laserlichtquelle (3) und Umlenkvorrichtung (4) Hilfslinien (7) auf den Untergrund vor dem Fahrzeug (2) oder in einen Raum vor dem Fahrzeug (2) zu projizieren.

3. Beleuchtungsmodul (1) nach Anspruch 2, **dadurch gekennzeichnet, dass** die Führungsstrahlen (6) und/oder die Hilfslinien (7) zumindest teilweise in einen Bereich projizierbar sind, der von Abblendscheinwerfern und/oder Nebelscheinwerfern des Fahrzeugs (2) nicht ausleuchtbar ist.

4. Beleuchtungsmodul (1) nach Anspruch 2 oder 3, **dadurch gekennzeichnet, dass** die Steuerungsvorrichtung (5) zum Einbringen eines Entfernungsmaßstabes entlang der Fahrtrichtung in die Führungsstrahlen (6) und/oder die Hilfslinien (7) ausgebildet ist, wobei der Entfernungsmaßstab (11) insbesondere durch Intensitätsmodulation des Laserlichts generierbar ist.

5. Beleuchtungsmodul (1) nach einem der vorhergehenden Ansprüche, **dadurch gekennzeichnet, dass** ein von der Laserlichtquelle (3) ausgehender Lichtstrom von der Umlenkvorrichtung (4) in zwei Dimensionen, insbesondere unabhängig voneinander, auslenkbar ist.

6. Beleuchtungsmodul (1) nach einem der vorhergehenden Ansprüche, **dadurch gekennzeichnet, dass** die Steuerungsvorrichtung (5) zum kontinuierlichen Ablenken des Laserlichts durch die Umlenkvorrichtung (4) ausgebildet ist, sodass eine Fläche auf den Untergrund vor dem Fahrzeug (2) oder in einen Raum vor dem Fahrzeug (2) projizierbar ist.

7. Beleuchtungsmodul (1) nach einem der vorhergehenden Ansprüche, **dadurch gekennzeichnet, dass** die Steuerungsvorrichtung (5) mit einem Bussystem des Fahrzeugs (2) verbindbar ist, um Umfelddaten des Fahrzeugs (2), insbesondere von einer Umfeldsensorik des Fahrzeugs (2), zu empfangen.

8. Fahrzeug (2) umfassend ein Beleuchtungsmodul (1) nach einem der vorhergehenden Ansprüche.

9. Fahrzeug (2) nach Anspruch 8, **dadurch gekennzeichnet, dass** das Beleuchtungsmodul (1) in einen Scheinwerfer (8), insbesondere in einen Nebelscheinwerfer, des Fahrzeugs (2) integriert ist.

10. Fahrzeug (2) nach Anspruch 8, **dadurch gekennzeichnet, dass** das Beleuchtungsmodul (1) in zumindest einen, insbesondere in zwei, Außenspiegel (9) des Fahrzeugs (2) integriert ist.
